# EUROPÄISCHE PATENTSCHRIFT

(11) **EP 2 603 338 B1**
(45) Veröffentlichungstag und Bekanntmachung des Hinweises auf die Patenterteilung: **22.05.2019**
(21) Anmeldenummer: 11810987.5
(22) Anmeldetag: 12.08.2011
(51) Int. Cl.: B22D 11/16, G01N 21/89

(54) **VORRICHTUNG, STRANGGIEßANLAGE MIT DER VORRICHTUNG UND VERFAHREN ZUM BERÜHRUNGSLOSEN ERKENNEN WENIGSTENS EINER FEHLERSTELLE**
DEVICE, STRAND CASTING SYSTEM HAVING THE DEVICE, AND METHOD FOR DETECTING AT LEAST ONE FLAW WITHOUT CONTACT
DISPOSITIF, INSTALLATION DE COULÉE CONTINUE ÉQUIPÉE DE CE DISPOSITIF ET PROCÉDÉ DE DÉTECTION SANS CONTACT D'AU MOINS UN ENDROIT DÉFECTUEUX

(30) Priorität: 13.08.2010 AT 13642010
(43) Veröffentlichungstag der Anmeldung: 19.06.2013
(73) Patentinhaber: voestalpine Stahl GmbH, 4020 Linz (AT)
(72) Erfinder: CIHAL, Rudolf, A-4020 Linz (AT); BRUMMAYR, Markus, A-4082 Aschach (AT); SCHUSTER, Stefan, A-4470 Enns (AT)
(74) Vertreter: Jell, Friedrich
(86) Internationale Anmeldenummer: PCT/AT2011/050006
(87) Internationale Veröffentlichungsnummer: WO 2012/019213

(56) Entgegenhaltungen:
- EP-A1- 0 985 472
- EP-A1- 2 119 513
- EP-B1- 0 153 565
- WO-A1-95/17665
- WO-A1-97/00439
- DE-A1- 2 911 578
- DE-A1- 3 413 027
- DE-A1- 19 941 600
- Anonymous: "CMOS Camera EL1-D1312-160-CL-12 Electroluminescence camera with NIR sensitive Photonfocus sensor", Laser2000 , XP002670515, Gefunden im Internet: URL:www.laser2000.fr/fileadmin/Produktdate n/PHF/Datenblaetter_Gestempelt/PHF-EL1-D13 12-160-CL-12.pdf [gefunden am 2012-02-29]

## Beschreibung

### Technisches Gebiet

Die Erfindung betrifft eine Vorrichtung, eine Stranggießanlage mit der Vorrichtung und ein Verfahren zum berührungslosen Erkennen wenigstens einer Fehlerstelle und/oder mindestens einer Abmessung an einem warmen stranggegossenen Material, insbesondere einer warmen Bramme, einer Gießanlage, vorzugsweise einer Stranggießanlage, bei dem wenigstens teilweise auf die Oberfläche des stranggegossenen Materials mindestens eine Kamera zur Sensordatenaufnahme von wenigstens Infrarotstrahlung aufweisender elektromagnetischer Strahlung optisch direkt und/oder indirekt gerichtet ist und mindestens über diese aufgenommenen Sensordaten auf die Fehlerstelle und/oder auf die Abmessung am stranggegossenen Material rückgeschlossen wird.

### Stand der Technik

Um Fehlerstellen, insbesondere einen Brennbart, an einer warmen Bramme einer Stranggießanlage berührungslos erkennen zu können, ist ein Verfahren und eine Vorrichtung bekannt, bei der eine Infrarot-Kamera bzw. eine Thermovisionskamera auf die Bramme optisch gerichtet ist und aus den über diese Kamera gewonnenen Bildinformationen bzw. Sensordaten Rückschlüsse auf Kenndaten der Bramme getroffen werden. Diese Sensordaten der Infrarot-Kamera berücksichtigen Infrarotstrahlung im Spektralbereich des nahen Infrarots (NIR), wobei weiter aus dem Stand der Technik bekannt ist, die Bramme mit einer zusätzlichen Strahlungsquelle zu beleuchten, um die Messergebnisse zu verbessern. Nachteilig bei derartigen Verfahren und Vorrichtungen ist, dass diese vergleichsweise kostenintensiv und außerdem gegenüber vergleichsweise rauen Umgebungseinflüssen, welche insbesondere bei einer Stranggießanlage vorherrschen, empfindlich reagieren, was keine hohen Standzeiten solcher Vorrichtungen erlaubt. Außerdem konnte festgestellt werden, dass für ein Rückschließen auf Fehlerstellen und/oder Abmessungen unter Verwendung von Sensordaten einer Thermovisionskamera ein vergleichsweise hoher Rechenaufwand besteht, was zu einem verhältnismäßig träge reagierenden Verfahren zum berührungslosen Erkennen von Fehlerstellen und/oder Abmessungen an einer warmen Bramme einer Stranggießanlage führen kann.

Außerdem ist es aus der EP0153565B1 bekannt, als ausgewähltes Spektrum für eine optischelektrische Detektion das nahe Infrarot (NIR) zu verwenden, um an einem heißen Metallkörper Oberflächenschäden feststellen zu können. Ebenso wird für diese Beurteilung auch das sichtbare elektromagnetische Spektrum verwendet. Zur konstruktiven Lösung wird ein Kaltspiegel vorgeschlagen, der das sichtbare Spektrum der elektromagnetischen Strahlung abtrennt. Dieses Infrarotspektrum wird dann einem Zeilensensor einer Kamera zugeführt. Trotz dieser Aufspaltung der Spektralbereiche zeigte das Verfahren sowie auch die Vorrichtung nachteilig eine vergleichsweise hohe Störanfälligkeit, insbesondere bei einer Verwendung bei Stranggießanlagen.

Die Merkmale der Oberbegriffe der Ansprüche 1 und 9 sind aus der WO95/17665A1 bekannt.

### Darstellung der Erfindung

Die Erfindung hat sich daher die Aufgabe gestellt, ein Verfahren der eingangs geschilderten Art derart zu verbessern, dass schnell eine Fehlerstelle und/oder eine Abmessung an einem warmen stranggegossenen Material berührungslos erkannt werden kann, ohne dass damit eine verminderte Zuverlässigkeit des Verfahrens in Kauf genommen werden muss. Des Weiteren soll das Verfahren bedienungsfreundlich sein.

Die Erfindung löst die gestellte Aufgabe hinsichtlich des Verfahrens dadurch, dass sich die Aufnahme von Sensordaten auf Infrarotstrahlung im kurzwelligen Teil (IR-A) des nahen Infrarots (NIR) beschränkt.

Beschränkt sich die Aufnahme von Sensordaten auf Infrarotstrahlung im kurzwelligen Teil (IR-A) des nahen Infrarots (NIR), dann kann die Zuverlässigkeit des Erkennens von Fehlerstellen und/oder Abmessungen vergleichsweise deutlich erhöht werden. Es können nämlich Störeinflüsse von anderen Spektralbereichen zuverlässig von der Datenverarbeitung fern gehalten werden, so dass mit dieser Verarbeitung auf verfahrenstechnisch einfache Weise eine hohe Erkennungsrate sichergestellt werden kann. Solch ein IR-A Band kann beispielsweise in einem Spektralbereich von 0,78 bis 1,4 µm Wellenlänge von elektromagnetischen Wellen liegen. Bevorzugt kann sich eine Beschränkung der Infrarotstrahlung auf höchstens eine Wellenlänge bis 1,1 µm herausstellen. Auf Basis der Aufnahme von solchen Sensordaten kann weiter eine besondere Verfahrensverbesserung in der berührungslosen Beobachtung eines warmen stranggegossenen Materials einer Stranggießanlage, insbesondere aus einer Gießanlage, vorzugsweise aus einer Stranggießanlage, ermöglicht werden. Verfahrensbedingte Störungen, die selbst im nahen Infrarot (NIR) vorherrschen und beispielsweise auf Wasserdampf und/oder CO₂ bzw. andere stahlwerksrelevante Gase zurückzuführen sind, konnten damit deutlich in ihrem Einfluss auf das Verfahren reduziert werden. So traten erfindungsgemäß Unschärfen und/oder Helligkeitsschwankungen in verschiedensten Bereichen der Bildaufnahme des Sensors vermindert auf, was eine standfeste Auswertung bzw. ein standfestes Verfahren sicherstellten kann. Außerdem kann so auf einfache Weise die Datenmenge an Sensordaten reduziert werden, bevor anhand wenigstens dieser reduzierten Strahlung bzw. der sich daraus ergebenden Sensordaten auf eine Fehlerstelle bzw. auf Fehlerstellen und/oder eine Abmessung des stranggegossenen Materials bzw. auf Abmessungen des stranggegossenen Materials rückgeschlossen wird. Durch diesen verminderten Rechenaufwand kann außerdem ein schnelles und verhältnismäßig dynamisch reagierendes Verfahren ermöglich werden, was wie bereits erwähnt die Zuverlässigkeit des Verfahrens nicht reduziert, obwohl eine Verminderung des zu analysierenden Spektralbereichs bzw. eine reduzierte Anzahl an Wellen der elektromagnetischen Strahlung weiterverarbeitet wird. Das erfindungsgemäße Verfahren weist daher gegenüber dem Stand der Technik eine erhöhte Robustheit und damit eine vergleichsweise hohe Standfestigkeit auf. Auch kann mit dem erfindungsgemäßen Verfahren die Schnittqualität auf einfache Weise erfasst werden.

Im Allgemeinen wird erwähnt, dass eine Fehlerstelle beispielsweise ein Brennbart, eine Schleifspur oder ein Längsriss sein kann, wobei unter einer Abmessung beispielsweise die Länge, Breite, Verformung der Topologie, Schüsselung, Ausbauchung der Schmalseiten etc. verstanden werden kann. Unter stranggegossenem Material kann außerdem neben einer Bramme beispielsweise ein Knüppel sowie ein anderes Halbzeug bzw. auch ein Strang einer kontinuierlichen Gießanlage verstanden werden.

Wird die elektromagnetische Strahlung auf den kurzwelligen Teil (IR-A) des nahen Infrarots (NIR) optisch beschränkt, bevor diese Strahlung der Sensordatenaufnahme der Kamera zugeführt wird, dann kann unabhängig von den Eigenschaften des Sensors der Kamera der gewünschte Spektralbereich zur Datenverarbeitung eingegrenzt werden. Es kann daher keine unerwünschte Sensordatenaufnahme aus anderen Spektralbereichen eintreten, so dass ein standfestes Verfahren sichergestellt werden kann. Außerdem kann dieses Verfahren äußerst flexibel gegenüber Wartungsarbeiten am Sensor oder an der Kamera sein, wodurch sich eine vergleichsweise einfache Handhabung ergeben kann. Bevorzugt kann sich eine Beschränkung auf eine Wellenlänge kleiner gleich 1,1 µm herausstellen. Erfindungsgemäß kann somit die elektromagnetische Strahlung höchstens auf den kurzwelligen Teil (IR-A) des nahen Infrarots (NIR) optisch beschränkt werden.

Alternativ dazu kann die Aufnahme von Sensordaten auf Infrarotstrahlung im kurzwelligen Teil (IR-A) des nahen Infrarots (NIR) beschränkt werden, indem die der Kamera zur Sensordatenaufnahme zugeführte elektromagnetische Strahlung auf eine Infrarotstrahlung und/oder dazu längwelligere Strahlung optisch und auf Grundlage der spektralen Empfindlichkeit des Sensors auf eine Infrarotstrahlung im kurzwelligen Teil (IR-A) des nahen Infrarots (NIR) beschränkt wird. Verfahrenstechnisch kann damit auf einfache Weise ein Bandpass für den kurzwelligen Teil (IR-A) des nahen Infrarots (NIR) gebildet werden, indem hierfür der optische Filter als Hochpass und die Empfindlichkeit des Sensors als Tiefpass zusammenwirken.

Vereinfachte Verfahrensbedingungen können sich weiter ergeben, wenn eine Sensoraufnahme mit Hilfe eines CMOS Sensors (APS) der Kamera erfolgt. Außerdem sind derartige Sensoren vergleichsweise robust gegenüber Umgebungseinflüssen, so dass ein standfestes Verfahren geschaffen werden kann. Hinzu kommt, dass eine derartige Kamera gegenüber einer Thermovisionskamera unproblematischer verwendbar ist, so dass das erfindungsgemäße Verfahren einfach handhabbar werden kann. Erfolgt die Sensoraufnahme mit Hilfe eines eine Auflösung größer gleich ein Megapixel aufweisenden Sensors der Kamera, dann kann sich eine besonders hohe Genauigkeit und damit Zuverlässigkeit beim berührungslosen Erkennen von Fehlerstellen und/oder Abmessungen einstellen.

Wird die Kamera im Wesentlichen auf die Eigenstrahlung des stranggegossenen Materials optisch direkt und/oder indirekt ausgerichtet, so kann sich damit die Möglichkeit eröffnen, die Reaktionsschnelligkeit des Verfahrens noch weiterer zu verbessern. Es kann nämlich damit im Verfahren Infrarotstrahlung von anderen Gegenständen beim Rückschließen auf Fehlerstellen und/oder auf die Abmessungen des stranggegossenen Materials ausgeschlossen werden. Hinzu kommt, dass keine externe Beleuchtung (Lampen und/oder Laser) benötigt werden, was neben einem vereinfachten Verfahren auch die Standfestigkeit des Verfahrens gegenüber den vergleichsweise rauen Umgebungseinflüssen, wie diese bei Gießanlagen vorherrschen, erhöhen kann. Unter Eigenstrahlung ist insbesondere zu verstehen, dass ein stranggegossenes Material durch keine zusätzliche Wärmequelle beheizt wird bzw. sich durch dessen eigene Strahlung definiert, die in Folge des Gießprozesses geschaffen wird.

Vorteilhaft kann bei wenigstens einer erkannten Fehlerstelle und/oder bei einer Abweichung von vorgegebenen Parametern wenigstens einer Abmessung am stranggegossenen Material dieses Material einer wenigstens teilweise gesonderten Weiterverarbeitung unterworfen werden, dies mit als in Ordnung befundenen stranggegossene Materialien geschieht. Damit kann ein vollautomatisiertes Verfahren geschaffen werden, bei dem ein fehlerhaftes stranggegossenes Material erkannt und automatisch entsprechende Maßnahmen getroffen werden können. Diese Maßnahmen können von Datenbankeinträgen, Nachbearbeitungsschritten, bis zu einem Ausscheiden des fehlerhaften stranggegossenen Materials reichen, so dass das erfindungsgemäße Verfahren eine vergleichsweise hohe Qualitätssicherung in der Produktion erfahren kann. Außerdem kann damit eine erhöhte Automatisierung im Verfahren bzw. eine Verfahrensoptimierung vorgenommen werden, wodurch sich die Erfindung besonders gegenüber dem Stand der Technik auszeichnen kann.

Um die Bedienungsfreundlichkeit des Verfahrens zu verbessern, können zum Rückschließen auf eine Fehlerstelle und/oder eine Abmessung am stranggegossenen Material die Sensordaten der Kamera zu einem Gesamtstrahlungsbild des stranggegossenen Materials zusammengesetzt werden. Mit solch einem Gesamtstrahlungsbild kann beispielsweise das Bedienpersonal vergleichsweise schnell eine vollständige Inspektion des stranggegossenen Materials vornehmen, so dass Fehler sehr schnell erkannt und eine Verringerung der Fehlerkosten beim Betrieb einer Gießanlage ermöglicht werden kann.

Als vorteilhaft kann sich herausstellen, wenn mehrere Einzelbilder der Kamera, insbesondere mehr als zwei Einzelbilder, zu einem Gesamtstrahlungsbild des stranggegossenen Materials zusammengefügt werden, weil sich damit die Zuverlässigkeit des Verfahrens erhöht werden kann. Bekannte Algorithmen zum Überlappen der Einzelbilder des stranggegossenen Materials und damit zur Erhöhung der Auflösung des Strahlungsabbilds können hierzu verwendet werden.

Die Erfindung hat sich weiter die Aufgabe gestellt, eine Vorrichtung der eingangs geschilderten Art derart zu verbessern, dass damit konstruktiv einfach und gegenüber optischen Störungen höchst standfest eine Fehlerstelle und/oder eine Abmessung an einem warmen stranggegossenen Material berührungslos erkannt werden kann.

Die Erfindung löst die gestellte Aufgabe hinsichtlich der Vorrichtung dadurch, dass die Durchlässigkeit des Filters auf den kurzwelligen Teil (IR-A) des nahen Infrarots (NIR) höchstens beschränkt ist oder dass die spektrale Infrarotempfindlichkeit des Sensors im kurzwelligen Teil (IR-A) des nahen Infrarots (NIR) liegt.

Ist die Durchlässigkeit des Filters auf den kurzwelligen Teil (IR-A) des nahen Infrarots (NIR) beschränkt oder liegt die spektrale Infrarotempfindlichkeit des Sensors im kurzwelligen Teil (IR-A) des nahen Infrarots (NIR), dann kann eine Störanfälligkeit der optischen Beobachtung deutlich vermindert bzw. damit die Zuverlässigkeit der Vorrichtung beim Erkennen wenigstens einer Fehlerstelle und/oder mindestens einer Abmessung an einem warmen stranggegossenen Material erheblich erhöht werden. Insbesondere für ein warmes stranggegossenes Material aus einer Gießanlage, vorzugsweise aus einer Stranggießanlage. Insbesondere ein, für den kurzwelligen Teil (IR-A) abgestellter Filter konnten sich durch eine vergleichsweise geringe Dämpfung auszeichnen, so dass hohe Empfindlichkeiten bei der Detektion erreicht werden können. Bevorzugt kann sich eine Beschränkung auf den kurzwelligen Teil (IR-A) des nahen Infrarots (NIR) herausstellen, wenn die Wellenlängen an durchgelassener Infrarotstrahlung kleiner gleich 1,1 µm sind. Im Vergleich dazu kann der Konstruktionsaufwand der Vorrichtung weiter reduziert werden, indem eine Kamera bzw. ein Sensor verwendet wird, dessen spektrale Infrarotempfindlichkeit im kurzwelligen Teil (IR-A) des nahen Infrarots (NIR) liegt. Diese im kurzwelligen Teil (IR-A) auslaufende spektrale Empfindlichkeit auf Infrarot kann nämlich als Tiefpass zur Filterung der Infrarotstrahlung genutzt werden. Mit diesen beiden Lösungsansätzen, kann damit eine besonders gegenüber den widrigen Umständen bei einer Gießanlage standfeste Vorrichtung geschaffen werden, weil optische Störungen, bedingt durch Wasserdampf und/oder CO₂ bzw. anderen stahlwerksrelevanten Gasen, bei der Bildverarbeitung nur einen geringen Einfluss ausüben können. Außerdem kann damit beispielsweise auf aufwendige Beleuchtungseinrichtungen - sei es IR Strahler oder Lasereinrichtungen - verzichtet werden, was zusätzlich eine kostengünstige Vorrichtung ermöglichen kann. Die Sensordaten aus der spektralbeschränkten elektromagnetischen Strahlung haben sich nämlich überraschend als ausreichend genau herausgestellt, um eine Fehlerstelle und/oder eine Abmessung an einem warmen stranggegossenen Material erkennen zu können. Außerdem kann auf einfache Weise ein Störungseinfluss von anderen Spektralbereichen vom anschließenden Verarbeitungsverfahren fern gehalten werden, so dass nicht nur mit vermindertem Hardwareaufwand eine schnelle und kostengünstige Vorrichtung geschafften werden kann, sondern auch in Echtzeit die Eigenschaften des an der Kamera vorbeilaufenden stranggegossenen Materials überprüfbar wird. Fehlerstellen können so bis spätestens am Ende des Auslaufs der Gießanlage erkannt werden. Auch muss dadurch der Transport des stranggegossenen Materials und/oder der laufende Gießprozess nicht verzögert und/oder beschleunigt werden. Die erfindungsgemäße Vorrichtung kann daher verminderte Fehlerkosten ermöglichen und außerdem zur Prozessoptimierung beitragen.

Weist die Kamera einen Sensor mit einer Auflösung größer gleich ein Megapixel auf, dann kann die Standfestigkeit der Vorrichtung auch bei optischen Störungen in indirektem und/oder direktem Weg hoch gehalten werden.

Besonders kostengünstig kann die Vorrichtung werden, wenn die Kamera einen CMOS Sensor (APS) aufweist. Im Gegensatz zum Stand der Technik kann so auf eine kostenintensive Thermovisionskamera verzichtet werden, da erfindungsgemäß der Spektralbereich des sichtbaren Lichts vom CMOS Sensor der Kamera, auf einfache Weise ferngehalten werden kann. Im Allgemeinen wird unter APS ein aktiver Pixelsensor verstanden, der als ein Halbleiterdetektor zur Lichtmessung ausgebildet sein kann.

Eine besonders vorteilhafte Stranggießanlage kann geschaffen werden, wenn diese Anlage eine Strangführung, ein von der Strangführung wenigstens teilweise geführtes warmes stranggegossenes Material, einen Auslauf für das stranggegossene Material und eine Vorrichtung zum berührungslosen Erkennen wenigstens einer Fehlerstelle und/oder mindestens einer Abmessung an einem warmen stranggegossenen Material aufweist. Dadurch dass die Kamera der Vorrichtung vor dem Ende des Auslaufs derart angeordnet ist, dass von der Vorrichtung eine Fehlerstelle und/oder eine Abmessung des stranggegossenen Materials erkannt werden kann, bevor das stranggegossene Material das Ende des Auslaufs erreicht, können Verzögerungen in der Disposition des stranggegossenen Materials, insbesondere der Bramme vermieden werden. Dies kann für eine besondere Erleichterung und Kostenminimierung in der gesamten Logistikplanung einer Stranggießanlage genützt werden.

Weist eine Stranggießanlage eine Gießeinrichtung, eine mit der Gießeinrichtung anschließende Strangführung, eine wenigstens mit der Gießeinrichtung und mit der Strangführung verbundene Steuerung und eine Vorrichtung zum berührungslosen Erkennen wenigstens einer Fehlerstelle und/oder mindestens einer Abmessung an einem warmen stranggegossenen Material auf, dann kann eine weiter verbesserte Anlage geschaffen werden, wenn die Steuerung unabhängig von Parametern der Vorrichtung mit wenigstens der Gießeinrichtung und/oder mit wenigstens der Strangführung zur Ansteuerung verbunden ist. Dadurch kann es beispielsweise möglich werden, dass der Transport des stranggegossenen Materials und/oder der laufende Gießprozess nicht verzögert und/oder beschleunigt werden muss. Besonders vorteilhafte Bedingungen beim Betrieb einer Stranggießanlage können geschaffen werden, wenn einer Vorrichtung zum berührungslosen Erkennen wenigstens einer Fehlerstelle und/oder mindestens einer Abmessung an einem warmen stranggegossenen Material bei einer Stranggießanlage zur Auslösung einer teilweise gesonderten Weiterverarbeitung eines warmen stranggegossenen Materials der Stranggießanlage bei wenigstens einer erkannter Fehlerstelle und/oder bei einer Abweichung von vorgegebenen Parametern wenigstens einer Abmessung am stranggegossenen Material verwendet wird.

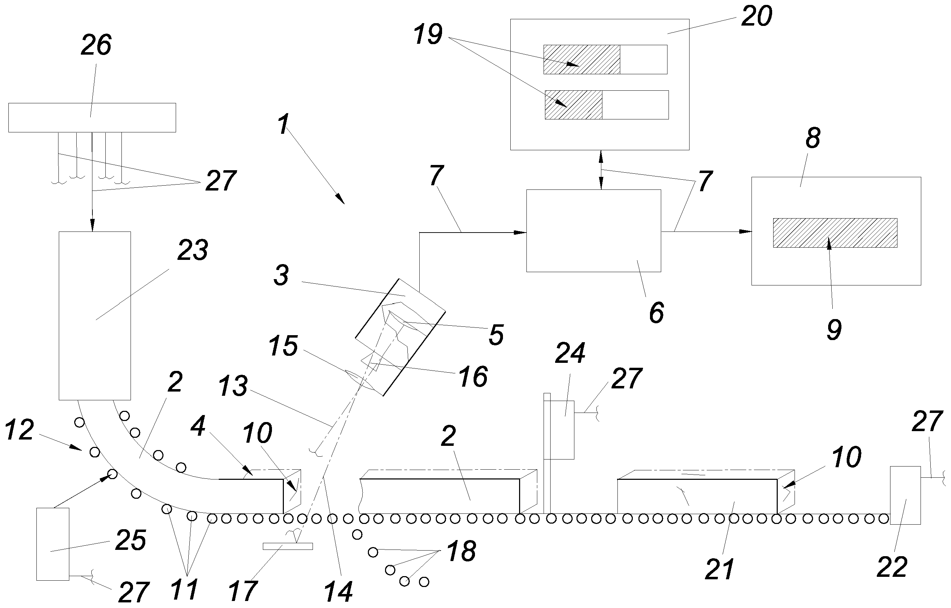

### Kurze Beschreibung der Zeichnung

In der Figur ist beispielsweise der Erfindungsgegenstand anhand eines Ausführungsbeispiels dargestellt.

### Weg zur Ausführung der Erfindung

Gemäß dem beispielsweise dargestellten Ausführungsbeispiel wird eine Vorrichtung 1 zum berührungslosen Erkennen von Fehlerstellen und/oder Abmessungen an einem warmen stranggegossenen Material 2 dargestellt. Unter warm kann eine Temperatur größer gleich der Raumtemperatur verstanden werden, insbesondere auch eine Temperatur im Temperaturbereich von 100 bis 1400 Grad Celsius. Die Vorrichtung 1 weist zu diesem Zweck eine Kamera 3 auf, die auf das als kontinuierlicher Strang ausgebildete stranggegossene Material 2 zur Aufnahme von mindestens Infrarotstrahlung optisch direkt und/oder indirekt gerichtet ist. Es versteht sich von selbst, dass die Kamera 3 nicht auf die gesamte Oberfläche 4 des stranggegossenen Materials 2 gerichtet sein muss, da auch das stranggegossene Material 2 teilweise aufgenommen werden kann, um in diesem Teil eine Abmessung und/oder eine Fehlerstelle 10 zu erkennen. Diese Infrarotstrahlung, die mindestens eine elektromagnetische Welle im Infrarot aufweist, wird von einem Sensor 5 der Kamera 3 aufgenommen, dessen Sensordaten einer Datenverarbeitung unterworfen werden. Hierzu ist eine Recheneinheit 6 vorgesehen, die mit der Kamera 3 datenverbunden ist, beispielsweise über einen digitalen Bus 7. Die programmgesteuerte Recheneinheit 6 verarbeitet nun die Sensordaten der Kamera 3 und gibt auf einer mit der Recheneinheit 6 verbundenen Anzeige 8 ein Strahlungsbild 9 des stranggegossenen Materials 2 aus. Die Recheneinheit 6 dient daher zum Rückschließen wenigstens über die Sensordaten der Kamera 3 auf Fehlerstellen und/oder auf die Abmessungen des stranggegossenen Materials 2. Solch eine Fehlerstelle 10 kann beispielsweise ein Brennbart darstellen, wie dieser auf einer Stirnseite des stranggegossenen Materials 2 erkannt werden kann.

Das über Rollen 11 einer nur teilweise dargestellten Gießanlage 12 bzw. Stranggießanlage an der Kamera 3 vorbeigeführte stranggegossene Material 2 kann so auf einfache Weise vom Bedienpersonal berührungslos überprüft werden. Auch ist eine automatische Überprüfung vorstellbar. Um die konstruktiven Voraussetzungen an die Recheneinheit 6 gering zu halten und um insbesondere eine zuverlässige und standfeste Vorrichtung zu schaffen - herrschen doch im Bereich einer Gießanlage 12 besonders widrige Umstände vor -, ist im optisch direkten Weg 13 und/oder im optisch indirekten Weg 14 vor der Kamera 3 ein gegenüber Licht undurchlässiger Filter 15 vorgesehen, wodurch die Durchlässigkeit des Filters 15 auf Strahlung ab dem Infrarot beschränkt ist. Beispielsweise kann solch ein Filter ein Tageslichtsperrfilter sein, der elektromagnetische Strahlung mit einer Wellenlängen < 780 nm (sichtbares Licht) sperrt. Vorteilhaft kann sich hier der Tageslichtfilter auch durch seine vergleichsweise geringe Dämpfung auszeichnen. Um nun die Aufnahme von Sensordaten auf Infrarotstrahlung im kurzwelligen Teil (IR-A) des nahen Infrarots (NIR) zu beschränken, liegt die spektrale Empfindlichkeit des Sensors 5 auf Infrarotstrahlung im kurzwelligen Teil (IR-A) des nahen Infrarots (NIR). Dies kann unter anderem mit einer vergleichsweise kostengünstigen Kamera 3 ermöglicht werden, die einen CMOS Sensor (APS) 5 aufweist. Die Infrarotempfindlichkeit dieser Kameras bis zum Ende des kurzwelligen Teils (IR-A) des nahen Infrarots (NIR) kann somit genutzt werden, das gefilterte Infrarot auf eine Infrarotstrahlung im kurzwelligen Teil (IR-A) des nahen Infrarots (NIR) zu beschränken. Die vorwiegende spektrale Empfindlichkeit des CMOS Sensor (APS) 5 im sichtbaren Licht kann durch den vorgeschalteten Filter 15 keinen nachteiligen Einfluss auf das berührungslose Erkennen von Fehlerstellen 10 und/oder Abmessungen am warmen stranggegossenen Material 2 der Gießanlage 12 haben. Damit können Störeinflüsse anderer Spektralbereiche, insbesondere die aus dem sichtbaren Licht oder auch aus dem höherwelligen Bereich des nahen Infrarots (NIR), auf einfache Weise vom Sensor 5 der Kamera 3 fern gehalten werden - was beispielsweise auf Wasserdampf und/oder CO₂ bzw. andere stahlwerksrelevante Gase zurückzuführen ist.

Alternativ kann das Infrarot in seinem Spektralbereich auch beschränkt werden, indem die Durchlässigkeit des Filters (15) auf den kurzwelligen Teil (IR-A) des nahen Infrarots (NIR) höchstens beschränkt ist. Bevorzugt hat sich eine Durchlässigkeit des Filters 15 von Infrarotstrahlung auf höchstens eine Wellenlänge bis 1,1 µm herausgestellt. Es braucht nicht weiter erwähnt werden, dass selbstverständlich der hier erwähnte Filter 5 auch mit einem CMOS Sensor (APS) 5 kombiniert werden kann.

Insbesondere kann die Kamera 3 auch mit deren Objektiv 16 auf das stranggegossene Material 2 optisch direkt und/oder indirekt beispielsweise über einen metallischen Spiegel 17 ausgerichtet werden, damit auf einfache Weise lediglich die Eigenstrahlung des stranggegossenen Materials 2 aufgenommen werden kann, um so Beeinträchtigungen durch Umgebungseinflüsse vermindern zu können.

Unter anderem hat sich eine Kamera 3 mit einem hochauflösenden CMOS Sensor 5 (APS) mit einer Auflösung größer gleich ein Megapixel als vorteilhaft herausgestellt.

Wird beispielsweise eine Fehlerstelle am stranggegossenen Material 2 erkannt, dann kann das stranggegossene Material 2 einer von den anderen stranggegossenen Materialien wenigstens teilweise gesonderten Weiterverarbeitung unterworfen werden, was andeutungsweise mit einer beispielsweise abzweigenden Rollenbahn 18 der Stranggießanlage 12 dargestellt ist.

Zum Rückschließen auf Fehlerstellen und/oder Abmessungen des stranggegossenen Materials 2 werden die Sensordaten der Kamera 3 zu einem Gesamtstrahlungsbild 9 des stranggegossenen Materials 2 zusammengesetzt. Ein derartiges Gesamtstrahlungsbild 9 kann insbesondere aus mehreren Einzelbildern 19 der Kamera 3, insbesondere aus mehr als zwei Einzelbilder 19, gebildet werden, um äußerst standfest Fehlerstellen 10 und/oder Abmessungen des stranggegossenen Materials 2 erkennen zu können. Zu diesem Zweck werden die Einzelbilder 19 in einem mit der Recheneinheit verbundenen Speicher 20 gespeichert. Nach einem Zusammenfügen der Einzelbilder 19 kann dann beispielsweise das Gesamtstrahlungsbild 9 des stranggegossenen Materials 2 auf einer Anzeige 8 ausgegeben werden. Nachgeschaltete Bilderkennungssysteme für Regelsysteme zur individuellen Steuerung einer Stranggießanlage auf Grundlage der Sensordaten sind weiter vorstellbar, jedoch nicht dargestellt.

Die Vorrichtung 1 kann jedoch auch nach dem Strang 2 angeordnet werden und so zum berührungslosen Erkennen wenigstens einer Fehlerstelle 10 und/oder mindestens einer Abmessung eines als Bramme 21 ausgeführten stranggegossenen Materials 2 dienen, was nicht näher dargestellt worden ist.

Eine vorteilhafte Stranggießanlage 12 ist geschaffen, wenn die Kamera 3 der Vorrichtung vor dem Ende des Auslaufs 22 der Stranggießanlage 12 derart angeordnet ist, dass von der Vorrichtung 1 eine Fehlerstelle 10 und/oder eine Abmessung des stranggegossenen Materials 2 erkannt werden kann, bevor das stranggegossene Material 2 das Ende des Auslaufs 22 erreicht. Damit kann eine vollständig automatisierte Inspektion des stranggegossenen Materials 2 auf verschiedenste Defekte erfolgen, sowie diese Vorrichtung 1 für eine automatische Disposition von stranggegossenem Material 2 verwendet werden, um damit eine qualitätsgesicherte Produktion zu ermöglichen bzw. eine signifikante Erleichterung und Kostenminimierung in der Logistik zu schaffen. Zusätzlich können damit auch die Fehlerkosten, vermindert werden, weil Fehler durch die erfindungsgemäße Vorrichtung 1 bzw. durch das Verfahren vergleichsweise früh erkannt werden können.

Die Stranggießanlage 12 weist außerdem eine Gießeinrichtung 23, einen Querteileinrichtung 24 und eine Strangführung 25 auf, die unter anderem mit den Rollen 11 zur Steuerung deren Drehzahl verbunden sein kann. Um den Ablauf der Stranggießanlage 12 regeln bzw. steuern zu können, ist eine Steuerung 26 vorgesehen, die über Datenleitungen 27 mit den Mitteln 22, 23, 24, 25 etc. verbunden ist. Auf die Prozesssteuerung der Stranggießanlage 12 wird jedoch durch die Vorrichtung 1 nicht eingegriffen, weil die Steuerung 26 unabhängig von Parametern der Vorrichtung 1 mit den Mitteln 22, 23, 24, 25 etc. zur Ansteuerung verbunden ist. Damit kann vorteilhaft vermieden werden, den Transport des stranggegossenen Materials 2 und/oder den laufenden Gießprozess zu verzögern und/oder beschleunigen zu müssen, was unter anderem eine Beeinträchtigung der Qualität des stranggegossenen Materials 2 senken kann.

## Patentansprüche

1. Verfahren zum berührungslosen Erkennen wenigstens einer Fehlerstelle (10) und/oder mindestens einer Abmessung an einem warmen stranggegossenen Material (2), insbesondere einer warmen Bramme (21), einer Gießanlage (12), vorzugsweise einer Stranggießanlage, bei dem wenigstens teilweise auf die Oberfläche (4) des stranggegossenen Materials (2) mindestens eine Kamera (3) zur Sensordatenaufnahme von wenigstens Infrarotstrahlung aufweisender elektromagnetischer Strahlung optisch direkt und/oder indirekt gerichtet ist und mindestens über diese aufgenommenen Sensordaten auf die Fehlerstelle (10) und/oder auf die Abmessung am stranggegossenen Material (2) rückgeschlossen wird, **dadurch gekennzeichnet, dass** sich die Aufnahme von Sensordaten auf Infrarotstrahlung im kurzwelligen Teil (IR-A) des nahen Infrarots (NIR) beschränkt.

2. Verfahren nach Anspruch 1, **dadurch gekennzeichnet, dass** die elektromagnetische Strahlung auf den kurzwelligen Teil (IR-A) des nahen Infrarots (NIR) optisch beschränkt wird, bevor diese Strahlung der Sensordatenaufnahme der Kamera (3) zugeführt wird.

3. Verfahren nach Anspruch 1, **dadurch gekennzeichnet, dass** die der Kamera (3) zur Sensordatenaufnahme zugeführte elektromagnetische Strahlung auf eine Infrarotstrahlung und/oder dazu langwelligere Strahlung optisch und auf Grundlage der spektralen Empfindlichkeit des Sensors (5) auf eine Infrarotstrahlung im kurzwelligen Teil (IR-A) des nahen Infrarots (NIR) beschränkt wird.

4. Verfahren nach Anspruch 1, 2 oder 3, **dadurch gekennzeichnet, dass** die Sensoraufnahme mit Hilfe eines insbesondere eine Auflösung größer gleich ein Megapixel aufweisenden CMOS Sensors (APS) (5) der Kamera (3) erfolgt.

5. Verfahren nach einem der Ansprüche 1 bis 4, **dadurch gekennzeichnet**, die Kamera (3) im Wesentlichen auf die Eigenstrahlung des stranggegossenen Materials (2) optisch direkt und/oder indirekt ausgerichtet wird.

6. Verfahren nach einem der Ansprüche 1 bis 5, **dadurch gekennzeichnet, dass** bei wenigstens einer erkannten Fehlerstelle (10) und/oder bei einer Abweichung von vorgegebenen Parametern wenigstens einer Abmessung am stranggegossenen Material (2) dieses Material (2) einer wenigstens teilweise gesonderten Weiterverarbeitung als anderen als in Ordnung befundenen stranggegossenen Materialien unterworfen wird.

7. Verfahren nach einem der Ansprüche 1 bis 6, **dadurch gekennzeichnet, dass** zum Rückschließen auf eine Fehlerstell (10) und/oder eine Abmessung am stranggegossenen Material (2) die Sensordaten der Kamera (3) zu einem Gesamtstrahlungsbild (9) des stranggegossenen Materials (2) zusammengesetzt werden.

8. Verfahren nach einem der Ansprüche 1 bis 7, **dadurch gekennzeichnet, dass** mehrere Einzelbilder (19) der Kamera (3), insbesondere mehr als zwei Einzelbilder (19), zu einem Gesamtstrahlungsbild (9) des stranggegossenen Materials (2) zusammengefügt werden.

9. Vorrichtung zum berührungslosen Erkennen wenigstens einer Fehlerstelle (10) und/oder mindestens einer Abmessung an einem warmen stranggegossenen Material (2), insbesondere einer warmen Bramme (21), einer Gießanlage (12), vorzugsweise einer Stranggießanlage, mit mindestens einer auf das stranggegossene Material (2) zur Aufnahme von wenigstens Infrarotstrahlung aufweisender elektromagnetischer Strahlung optisch direkt und/oder indirekt gerichteten Kamera (3), die einen Sensor (5) aufweist, und mit wenigstens einer mit der Kamera (3) verbundenen Recheneinheit (6) zum Rückschließen mindestens über die Sensordaten des Sensors (5) der Kamera (3) auf eine Fehlerstelle (10) und/oder auf eine Abmessung des stranggegossenen Materials (2), wobei im optischen Weg (13, 14) vor dem Sensor (5) der Kamera (3) ein auf die Durchlässigkeit von elektromagnetischer Strahlung im Wesentlichen auf das Infrarot und/oder dazu langwelligere Strahlung beschränkter Filter (15) vorgesehen ist, **dadurch gekennzeichnet, dass** die Durchlässigkeit des Filters (15) auf den kurzwelligen Teil (IR-A) des nahen Infrarots (NIR) beschränkt ist oder dass die spektrale Infrarotempfindlichkeit des Sensors (5) im kurzwelligen Teil (IR-A) des nahen Infrarots (NIR) liegt.

10. Vorrichtung nach Anspruch 9, **dadurch gekennzeichnet, dass** die Kamera (3) einen Sensor mit einer Auflösung größer gleich ein Megapixel aufweist.

11. Vorrichtung nach Anspruch 9 oder 10, **dadurch gekennzeichnet, dass** die Kamera (3) einen CMOS Sensor (APS) (5) aufweist.

12. Stranggießanlage mit einer Strangführung (25), mit einem von der Strangführung (25) wenigstens teilweise geführten warmen stranggegossenen Material (2), mit einem Auslauf (22) für das stranggegossene Material (2) und mit einer Vorrichtung (1) nach einem der Ansprüche 9 bis 11, wobei die Kamera (3) der Vorrichtung (1) vor dem Ende des Auslaufs (22) derart angeordnet ist, dass von der Vorrichtung (1) eine Fehlerstelle (10) und/oder eine Abmessung des stranggegossenen Materials (2) erkannt werden kann, bevor das stranggegossene Material (2) das Ende des Auslaufs (22) erreicht.

13. Stranggießanlage mit einer Gießeinrichtung (23), mit einer an die Gießeinrichtung (23) anschließenden Strangführung (25), mit einer wenigstens mit der Gießeinrichtung (23) und mit der Strangführung (25) verbundenen Steuerung (26) und mit einer Vorrichtung (1) nach einem der Ansprüche 9 bis 11, **dadurch gekennzeichnet, dass** die Steuerung (25) unabhängig von Parametern der Vorrichtung (1) mit wenigstens der Gießeinrichtung (23) und/oder mit wenigstens der Strangführung (25) zur Ansteuerung verbunden ist.

14. Verwendung einer Vorrichtung (1) nach einem der Ansprüche 9 bis 11 bei einer Stranggießanlage (12) zur Auslösung einer teilweise gesonderten Weiterverarbeitung eines warmen stranggegossenen Materials (2) der Stranggießanlage (12) bei wenigstens einer erkannter Fehlerstelle (10) und/oder bei einer Abweichung von vorgegebenen Parametern wenigstens einer Abmessung am stranggegossenen Material (2).

## Claims

1. Method for contactlessly detecting at least one flaw (10) and/or at least one dimension on a hot strand-cast material (2), in particular a hot slab (21), of a casting system (12), preferably of a strand casting system, in which at least one camera (3) for recording sensor data from electromagnetic radiation that includes at least infrared radiation is optically directly and/or indirectly directed at least partially onto the surface (4) of the strand-cast material (2), and the flaw (10) and/or the dimension on the strand-cast material (2) is inferred at least by way of said recorded sensor data, **characterized in that** the recording of sensor data is limited to infrared radiation in the short-wavelength part (IR-A) of the near-infrared (NIR).

2. Method according to claim 1, **characterized in that** the electromagnetic radiation is optically limited to the short-wavelength part (IR-A) of the near-infrared (NIR) before said radiation is supplied to the sensor data recording of the camera (3) .

3. Method according to claim 1, **characterized in that** the electromagnetic radiation supplied to the camera (3) for sensor data recording is optically limited to an infrared radiation and/or a longer-wavelength radiation in comparison thereto and is limited to an infrared radiation in the short-wavelength part (IR-A) of the near-infrared (NIR) based on the spectral sensitivity of the sensor (5).

4. Method according to claim 1, 2 or 3, **characterized in that** the sensor recording takes place by means of a CMOS sensor (APS) (5) of the camera (3), which in particular has a resolution greater than or equal to one megapixel.

5. Method according to one of claims 1 to 4, **characterized in that** the camera (3) is optically directly and/or indirectly directed substantially onto the inherent radiation of the strand-cast material (2).

6. Method according to one of claims 1 to 5, **characterized in that**, if at least one flaw (10) is detected and/or if at least one dimension on the strand-cast material (2) deviates from predefined parameters, said material (2) is subjected to an at least partially separate further processing than other strand-cast materials that are found to be in order.

7. Method according to one of claims 1 to 6, **characterized in that**, to infer a flaw (10) and/or a dimension on the strand-cast material (2), the sensor data of the camera (3) are brought together in order to form a total radiation image (9) of the strand-cast material (2).

8. Method according to one of claims 1 to 7, **characterized in that** a plurality of individual images (19) of the camera (3), in particular more than two individual images (19), are combined to form a total radiation image (9) of the strand-cast material (2) .

9. Apparatus for contactlessly detecting at least one flaw (10) and/or at least one dimension on a hot strand-cast material (2), in particular a hot slab (21), of a casting system (12), preferably of a strand casting system, comprising at least one camera (3) which has a sensor (5) and which is optically directly and/or indirectly directed onto the strand-cast material (2) in order to record electromagnetic radiation that includes at least infrared radiation, and at least one processing unit (6), connected to the camera (3), for inferring a flaw (10) and/or a dimension of the strand-cast material (2) at least by way of the sensor data of the sensor (5) of the camera (3), wherein a filter (15), which in terms of transmittance to electromagnetic radiation is limited substantially to infrared and/or longer-wavelength radiation in comparison thereto, is provided in the optical path (13, 14) in front of the sensor (5) of the camera (3), **characterized in that** the transmittance of the filter (15) is limited to the short-wavelength part (IR-A) of the near-infrared (NIR), or **in that** the spectral infrared sensitivity of the sensor (5) lies in the short-wavelength part (IR-A) of the near-infrared (NIR).

10. Apparatus according to claim 9, **characterized in that** the camera (3) has a sensor with a resolution greater than or equal to one megapixel.

11. Apparatus according to claim 9 or 10, **characterized in that** the camera (3) has a CMOS sensor (APS) (5).

12. Strand casting system comprising a strand guide (25), a hot strand-cast material (2) which is at least partially guided by the strand guide (25), a run-out (22) for the strand-cast material (2), and an apparatus (1) according to one of claims 9 to 11, wherein the camera (3) of the apparatus (1) is arranged before the end of the run-out (22) such that a flaw (10) and/or a dimension of the strand-cast material (2) can be detected by the apparatus (1) before the strand-cast material (2) reaches the end of the run-out (22).

13. Strand casting system comprising a casting device (23), a strand guide (25) adjoining the casting device (23), a controller (26) connected at least to the casting device (23) and to the strand guide (25), and an apparatus (1) according to one of claims 9 to 11, **characterized in that** the controller (25) is connected for actuation purposes to at least the casting device (23) and/or to at least the strand guide (25), regardless of parameters of the apparatus (1).

14. Use of an apparatus (1) according to one of claims 9 to 11 in a strand casting system (12) for triggering a partially separate further processing of a hot strand-cast material (2) of the strand casting system (12) if at least one flaw (10) is detected and/or if at least one dimension on the strand-cast material (2) deviates from predefined parameters.

## Revendications

1. Procédé pour la reconnaissance sans contact d'au moins un défaut (10) et/ou d'au moins une dimension sur un matériau de coulée continue chaud (2), en particulier une brame chaude (21), dans une installation de coulée (12), de préférence une installation de coulée continue, dans lequel au moins une caméra (3) est dirigée au niveau optique, directement et/ou indirectement, vers la surface (4) du matériau de coulée continue (2) afin d'acquérir des données de capteur d'un rayonnement électromagnétique contenant au moins un rayonnement infrarouge et le défaut (10) et/ou la dimension du matériau de coulée continue (2) sont déduits au moins à partir de ces données de capteur acquises, **caractérisé en ce que** l'acquisition des données de capteur se limite au rayonnement infrarouge dans la partie en ondes courtes (IR-A) du proche infrarouge (NIR).

2. Procédé selon la revendication 1, **caractérisé en ce que** le rayonnement électromagnétique est restreint au niveau optique à la partie en ondes courtes (IRA) du proche infrarouge (NIR) avant que ce rayonnement soit transmis à l'acquisition des données de capteur de la caméra (3).

3. Procédé selon la revendication 1, **caractérisé en ce que** le rayonnement électromagnétique transmis à la caméra (3) pour l'acquisition des données de capteur est restreint à un rayonnement infrarouge et/ou un rayonnement de plus grande longueur d'onde et, au niveau optique et sur la base de la sensibilité spectrale du capteur (5), à un rayonnement infrarouge dans la partie en ondes courtes (IR-A) du proche infrarouge (NIR).

4. Procédé selon la revendication 1, 2 ou 3, **caractérisé en ce que** l'acquisition par le capteur est réalisée à l'aide d'un capteur CMOS (APS) (5) de la caméra (3) présentant en particulier une résolution égale ou supérieure à un mégapixel.

5. Procédé selon l'une des revendications 1 à 4, **caractérisé en ce que** la caméra (3) est dirigée, au niveau optique, directement et/ou indirectement vers le rayonnement propre du matériau de coulée continue (2).

6. Procédé selon l'une des revendications 1 à 5, **caractérisé en ce qu'**en cas de détection d'au moins un défaut (10) et/ou d'une déviation par rapport à des paramètres prédéterminés d'au moins une dimension du matériau de coulée continue (2), ce matériau (2) est soumis à un traitement ultérieur au moins partiellement séparé des autres matériaux de coulée continue jugés corrects.

7. Procédé selon l'une des revendications 1 à 6, **caractérisé en ce qu'**afin de remonter à un défaut (10) et/ou à une dimension du matériau de coulée continue (2), les données de capteur de la caméra (3) sont réunies pour former une image de rayonnement d'ensemble (9) du matériau de coulée continue (2).

8. Procédé selon l'une des revendications 1 à 7, **caractérisé en ce que** plusieurs images (19) de la caméra (3), en particulier plus de deux images (19), sont réunies pour former une image de rayonnement d'ensemble (9) du matériau de coulée continue (2).

9. Dispositif pour la reconnaissance sans contact d'au moins un défaut (10) et/ou d'au moins une dimension sur un matériau de coulée continue chaud (2), en particulier une brame chaude (21), dans une installation de coulée (12), de préférence une installation de coulée continue, avec au moins une caméra (3) dirigée, au niveau optique, directement et/ou indirectement vers le matériau de coulée continue (2) afin de capter un rayonnement contenant au moins un rayonnement infrarouge et qui présente un capteur (5), et avec au moins une unité de calcul (6) connectée à la caméra (3) pour remonter, au moins à l'aide des données de capteur du capteur (5) de la caméra (3), jusqu'à un défaut (10) et/ou à une dimension du matériau de coulée continue (2), dans lequel est prévu dans le trajet optique (13, 14), avant le capteur (5) de la caméra (3), un filtre (15) dont la bande passante est restreinte, pour l'essentiel, à l'infrarouge et/ou à un rayonnement de plus grande longueur d'onde, **caractérisé en ce que** la bande passante du filtre (15) est restreinte à la partie en ondes courtes (IR-A) du proche infrarouge (NIR) ou **en ce que** la sensibilité spectrale dans l'infrarouge du capteur (5) se situe dans la partie en ondes courtes (IR-A) du proche infrarouge (NIR).

10. Dispositif selon la revendication 9, **caractérisé en ce que** la caméra (3) présente un capteur d'une résolution égale ou supérieure à un mégapixel.

11. Dispositif selon la revendication 9 ou 10, **caractérisé en ce que** la caméra (3) présente un capteur CMOS (APS) (5).

12. Installation de coulée continue avec un guide de coulée continue (25), avec un matériau de coulée continue (2) au moins partiellement guidé par le guide de coulée continue (25), avec une sortie (22) pour le matériau de coulée continue (2) et avec un dispositif (1) selon l'une des revendications 9 à 11, dans laquelle la caméra (3) du dispositif (1) est disposée avant l'extrémité de la sortie (22) de telle façon que le dispositif (1) puisse reconnaître un défaut (10) et/ou une dimension du matériau de coulée continue (2) avant que le matériau de coulée continue (2) atteigne l'extrémité de la sortie (22).

13. Installation de coulée continue avec une Installation de coulée (23), avec un guide de coulée continue (25) raccordé à l'installation de coulée (23), avec au moins une commande (26) connectée à l'installation de coulée (23) et au guide de coulée continue (25) et avec un dispositif (1) selon l'une des revendications 9 à 11, **caractérisée en ce que** la commande (25) est connectée en vue de l'activation au moins à l'installation de coulée (23) et/ou au moins au guide de coulée continue (25), indépendamment des paramètres du dispositif (1).

14. Utilisation d'un dispositif (1) selon l'une des revendications 9 à 11 dans une installation de coulée continue (12) pour déclencher un traitement ultérieur au moins partiellement séparé d'un matériau de coulée continue chaud (2) de l'installation de coulée continue (12) en cas de détection d'au moins un défaut (10) et/ou d'une déviation par rapport à des paramètres prédéterminés d'au moins une dimension du matériau de coulée continue (2).
